# EUROPÄISCHE PATENTANMELDUNG

(11) **EP 1 477 789 A2**
(43) Veröffentlichungstag der Anmeldung: **17.11.2004**
(21) Anmeldenummer: 04011164.3
(22) Anmeldetag: 11.05.2004
(51) Int. Cl.: G01L 5/00, G01L 5/10

(54) **Messvorrichtung für ein längsbewegtes Band und Messverfahren für Prozessparameter einer Bandförderung**

(30) Priorität: 14.05.2003 DE 10321865
(71) Anmelder: BETRIEBSFORSCHUNGSINSTITUT VDEh, INSTITUT FÜR ANGEWANDTE FORSCHUNG GmbH, D-40237 Düsseldorf (DE)
(72) Erfinder: Mücke, Gert, 40724 Hilden (DE); Luhn, Ernst, 42781 Haan (DE)
(74) Vertreter: König, Gregor Sebastian, Dipl.-Biol.

(57) **Zusammenfassung**

Die Erfindung betrifft ein Messverfahren insbesondere für den Bandzug und die Linienkraft einer Bandförderung, bei dem das Band in teilweiser Umschlingung um eine mitdrehende Messrolle, die mindestens einen Drucksensor zur Messung eines auf einen Oberflächenabschnitt der Messrolle wirkenden Drucks aufweist, und durch einen zwischen der Messrolle und einer Gegenrolle gebildeten Spalt geführt wird. Der auf einen Oberflächenabschnitt der Messrolle wirkende Druck wird mittels des Drucksensors mindestens an zwei Rotationspositionen der Messrolle gemessen wird. Der Rotationswinkel der Messrolle wird relativ zu einer Referenzsposition gemessen. Die Erfindung basiert auf dem Grundgedanken, den Verlauf eines auf einen Oberflächenabschnitt der Messrolle wirkenden Drucks über mindestens einen Teil der Rotation der Messrolle zu messen. Die Auswertung des Druckverlaufs erlaubt eine präzise Bestimmung von Prozessparametern, insbesondere für solche, die sich nicht unmittelbar aus einem lokal gemessenen Druckwert ergeben. So ist die sich aus einer Umrechnung des im Spalt zwischen Messrolle und Gegenrolle gemessenen Drucks ermittelte Kraft nicht die durch die Anstellkräfte der Walzen auf das Band im Spalt wirkende Linienkraft. Der gemessene Druckwert besteht zum Teil aus Druckkräften, die durch den auf das Band wirkenden Bandzug erzeugt werden. Diesen Unterschied kann die Erfindung kompensieren.

## Beschreibung

Die Erfindung betrifft eine Messvorrichtung für ein längsbewegtes Band und ein Messverfahren für eine Bandförderung. Insbesondere betrifft die Erfindung das technische Gebiet der Bandzugmessung, Bandprofilmessung und Linienkraftmessung, beispielsweise an Walzbändern, Kunststoffbändern, Papierbahnen oder Kartonbahnen während der Förderung eines solchen Bandes über Walzen/Rollen und durch einen Spalt.

DE 199 20 133 A1 beschreibt eines der möglichen Einsatzgebiete. Hier wird ein Verfahren zur Messung der Linienkraft im Spalt zwischen einer Tragtrommel und einer Wickelrolle beschrieben. Die Tragtrommel ist als Messrolle ausgebildet und weist Messelemente in Form von Piezoquarzen auf, die auf der Mantelfläche der rotierenden Messrolle angebracht sind. Die mit einer solchen Messrolle im Spalt zwischen Tragtrommel und Wickelrolle ermittelte Linienkraft entspricht jedoch nicht der tatsächlich durch die Anstellkräfte der Walzen auf das Band im Spalt wirkenden Linienkraft.

Vor diesem Hintergrund liegt der Erfindung die Aufgabe zugrunde, eine Messvorrichtung für ein längsbewegtes Band und ein Messverfahren für Prozessparameter einer Bandförderung zu schaffen, die eine präzisere Messung der Linienkraft und zudem die Messung weiterer Prozessparameter ermöglicht, zu schaffen.

Diese Aufgabe wird durch die Vorrichtung und das Verfahren der nebengeordneten Ansprüche gelöst. Vorteilhafte Ausgestaltungen sind in den Unteransprüchen angegeben.

Die Erfindung basiert auf dem Grundgedanken, den Verlauf eines auf einen Oberflächenabschnitt der Messrolle wirkenden Drucks über mindestens einen Teil der Rotation der Messrolle zu messen. Die Auswertung des Druckverlaufs erlaubt eine präzise Bestimmung von Prozessparametern, insbesondere für solche, die sich nicht unmittelbar aus einem lokal gemessenen Druckwert ergeben. So ist die sich aus einer Umrechnung des im Spalt zwischen Messrolle und Gegenrolle gemessenen Drucks ermittelte Kraft nicht die durch die Anstellkräfte der Walzen auf das Band im Spalt wirkende Linienkraft. Der gemessene Druckwert besteht zum Teil aus Druckkräften, die durch den auf das Band wirkenden Bandzug erzeugt werden.

Erfindungsgemäß weist die Messvorrichtung eine Messrolle und eine Gegenrolle auf, wobei die Messrolle mindestens einen Drucksensor zur Messung des auf einen Oberflächenabschnitt der Messrolle wirkenden Drucks aufweist. Zwischen Messrolle und Gegenrolle ist ein Spalt ausgebildet. Die Messvorrichtung ist für eine Bandführung ausgebildet, bzw. angeordnet, bei der das längsbewegte Band die Messrolle teilweise umschlingend und durch den Spalt geführt wird. Ein Winkelgeber ist zur Messung des Rotationswinkels der Messrolle relativ zu einer Referenzposition vorgesehen. Die Mesrolle rotiert um ihre Achse.

Ein längsbewegtes Band ist ein in Richtung seiner Längserstreckung bewegtes (gefördertes) Band.

Durch die Drucksensoren der Messrolle kann der auf einen Oberflächenabschnitt der Messrolle wirkende Druck während der Rotation der Messrolle gemessen werden. Der Winkelgeber erlaubt die Zuordnung der gemessenen Druckwerte zu einem bezüglich einer Referenzposition definierten Rotationswinkeln, wodurch der Druckverlauf relativ zur Referenzposition dargestellt werden kann.

Als Drucksensoren zur Messung eines auf einen Oberflächenabschnitt der Messrolle wirkenden Drucks werden insbesondere Drucksensoren mit einem Piezoelement verstanden. Es sind jedoch ohne weiteres auch andere Druck messende Sensoren einsetzbar, beispielsweise Wegsensoren, deren Messergebnis in einen Druckwert umgerechnet werden kann. Die Drucksensoren können überall dort angeordnet sein, wo sie den auf einen definierten Oberflächenabschnitt der Messrolle wirkenden Druck ermitteln können. Insbesondere sind die Drucksensoren unmittelbar an der Messrollenoberfläche, auf der Messrollenoberfläche oder in geringer Distanz unterhalb der Messrollenoberfläche angeordnet. Für den speziellen Aufbau einer Messrolle und insbesondere die Anordnung der Drucksensoren wird insbesondere auf DE 297 21 085 U, DE 199 18 699 A1, DE 196 16 980 A1 verwiesen. Die den Aufbau einer Messrolle und die Anordnung von Drucksensoren betreffenden Textstellen der genannten Druckschriften gelten als Teile der Beschreibung dieser Anmeldung.

Die Messvorrichtung ist derart ausgebildet, dass das längsbewegte Band die Messrolle teilweise umschlingend und durch den Spalt geführt wird. Die teilweise Umschlingung der Messrolle kann durch die Art der Zuführung des Bandes zu der Messrolle eingestellt werden. Beispielsweise kann durch die Anordnung von Umlenkrollen der Auflaufpunkt des Bandes auf die Messrolle festgelegt werden. Als Umschlingungswinkel hat sich insbesondere ein Winkel von weniger als 180°, vorzugsweise von 170 bis 150°, insbesondere 160°, als besonders vorteilhaft erwiesen, auch wenn andere Umschlingungswinkel ohne weiteres vorgesehen werden können.

Als Winkelgeber zur Messung des Rotationswinkels der Messrolle können herkömmliche Winkelgeber eingesetzt werden. Insbesondere können an der Messrollennabe angeordnete Winkelgeber verwendet werden. Beispielsweise können aber auch optische Messverfahren, die Kennungen an der Oberfläche der Messrolle erfassen, eingesetzt werden.

Als Spalt zwischen Messrolle und Gegenrolle wird ein Zwischenraum zwischen den Rollen verstanden, in dem das Band an beiden Rollen anliegt. Dabei wird in diesem Zusammenhang ein Anliegen an der Gegenrolle auch als Anliegen an bereits auf einer als Wickelrolle ausgebildeten Gegenrolle aufgewickelten Bandabschnitten verstanden.

Beim Einsatz eines einzigen Drucksensors können bereits gute Ergebnisse, insbesondere bei der Ermittlung des mittleren Bandzugs und der mittleren Linienkraft im Spalt ermittelt werden. Dies gilt ganz besonders dann, wenn der Drucksensor an einer Axialposition der Messrolle angebracht wird, bei der - beispielsweise durch Vergleichs- oder Vorversuche ermittelt - regelmäßig ein den Mittelwerten gut entsprechender Wert anliegt. Besonders bevorzugt weist die Messrolle mehrere Drucksensoren auf. Diese können derart angeordnet sein, dass sie den Druck von in Achsrichtung und/oder Umfangsrichtung der Messrolle nebeneinander angeordneten Oberflächenabschnitten messen können. Dabei müssen die Oberflächenabschnitte jedoch nicht zwingend unmittelbar aneinander grenzend angeordnet sein. Die Drucksensoren können so angeordnet sein, dass die ihnen jeweils zugeordneten Oberflächenabschnitte in einer zur Messrollenachse parallelen Linie liegen.

Zwei Drucksensoren können mit elektrischen Anschlüssen zu einer Parallelschaltung zusammengeschlossen sein. Hierdurch ist insbesondere eine Reduktion der zu verarbeitenden Messsignale möglich. Insbesondere werden hierfür Drucksensoren verwendet, die derart angeordnet sind, dass sich jeweils immer nur ein Drucksensor im Umschlingungsbereich der Messrolle befindet. Vorzugsweise sind die beiden Drucksensoren derart angeordnet, dass sie den Druck von 180° zueinander versetzten Oberflächen messen. Besonders zum Messen eines Bands mit Profilabweichungen kann die Messrolle mit einem elastischen Material beschichtet sein. Dieses Material passt sich der Profilform des Bandes an und erlaubt eine präzise Druckmessung. Ebenso können andere Verschaltungen von mehreren Drucksensoren erfolgen, die die Zahl der Messkanäle reduzieren. Bei der Verschaltung kann insbesondere davon Gebrauch gemacht werden, daß über den Umfang der Messrolle in Umfangsrichtung verteilte Drucksensor nicht gleichzeitig im Umschlingungsbereich angeordnet sind und deshalb - je nach Sensortyp - nicht gleichzeitig Messsignale mit Werten größer null liefern.

Die Gegenrolle kann relativ zur Messrolle bewegt werden. Dies ermöglicht beispielsweise ein Regelungssystemen, bei denen eine festgelegte Linienkraft eingeregelt werden kann. Hierzu können beispielsweise Hubzylinder vorgesehen sein. Ebenso kann eine der Rollen am einen Ende einer Wippe angeordnet sein, dessen anderes Ende mit Gewichten belastbar ist, wie auch andere Vorrichtungen zum Verschieben und Verschwenken der Rollen einsetzbar sind.

Vorzugsweise ist die Gegenrolle als Wickelrolle ausgebildet. Die Messvorrichtung wird dann insbesondere dazu eingesetzt, die Linienkraft beim Aufwickeln des Bandes zu messen. Mit zunehmenden Wickelungen auf der Wickelrolle kann der Achsabstand zwischen Wickelrolle und Messrolle vergrößert werden, so dass ein definierter Spalt erhalten bleibt.

Die Messrolle weist besonders bevorzugt eine elastische Beschichtung auf. Diese ist insbesondere derart elastisch, dass sie sich an ein Oberflächenprofil des Bandes anpassen kann. Vorzugsweise ist die Messrolle mit Gummi oder Polyurethan beschichtet.

Die erfindungsgemäße Messvorrichtung findet insbesondere zur Ermittlung des Bandzugs, der tatsächliche Linienkraft, das Bandprofil und der zwischen der Messrollenoberfläche und der Bandoberfläche bestehenden Reibung Verwendung. Sie kann in Regelkreisen eingesetzt werden. Sie wird insbesondere überall dort eingesetzt, wo Prozessparameter eines längsgeförderten Bands ermittelt werden, beispielsweise bei Prozessen mit Warmband, kalten Walzband, Papier- oder Kartonbahnen, Kunststofffolien, Filmen, Geweben, Textilien und anderen.

Das erfindungsgemäße Messverfahren für Prozessparameter einer Bandförderung sieht insbesondere vor, dass das Band in teilweiser Umschlingung um eine mitdrehende Messrolle, die mindestens einen Drucksensor zur Messung eines auf einen Oberflächenabschnitt der Messrolle wirkenden Drucks aufweist, und durch einen zwischen der Messrolle und einer Gegenrolle gebildeten Spalt geführt wird. Der auf einen Oberflächenabschnitt der Messrolle wirkenden Druck wird mittels des Drucksensors mindestens an zwei Rotationspositionen der Messrolle gemessen und der Rotationswinkel der Messrolle relativ zu einer Referenzposition ermittelt.

Als Prozessparameter werden insbesondere der auf das gesamte Band wirkende mittlere Bandzug, der auf einen Bandbreitenstreifen wirkende spezifische Bandzug, die Linienkraft (Nipkraft) und der zwischen der Messrollenoberfläche und der Bandoberfläche bestehende Reibung verstanden. Es ist jedoch ohne weiteres möglich, aufgrund der durch das Messverfahren bereitgestellten Informationen weitere Prozessparameter einer Bandförderung zu ermitteln. Als Bandförderung wird insbesondere die Bewegung eines Bandes entlang seiner Längsrichtung verstanden.

Die Druckmessung kann diskret an einzelnen Rotationspositionen der Messrolle erfolgen. Vorzugsweise misst der Drucksensor kontinuierlich, zumindest über einen Rotationsabschnitt der Messrolle.

Der auf einen Oberflächenabschnitt der Messrolle wirkende Druck mittels des Drucksensors kann gemessen werden, wenn sich der Oberflächenabschnitt im Bereich - vorzugsweise unmittelbar - im Spalt befindet. Dies ermöglicht insbesondere die Ermittlung der in dem Spalt auf das Band wirkenden Linienkraft (Nipkraft). Wann sich der relevante Oberflächenabschnitt im Bereich des Spalts befindet, kann - bei Kenntnis der Position des Spalts relatziv zur Referenzposition - aufgrund des dem Druckverlauf zugeordneten, gemessenen Rotationswinkels ermittelt werden. Alternativ kann bei diskontinuierlicher Messung eine Messung ausgelöst werden, wenn aufgrund des gemessenen Rotationswinkels feststeht, dass sich der dem Oberflächenabschnitt zugeordnete Drucksensor im Bereich des Spalts befindet.

Ebenso kann die Ermittlung der auf das Band wirkenden Linienkraft im Spalt durch Maximalwertsbildung aus der Reihe der während einer Rotation oder einer Teilrotation der Messrolle ermittelten Druckwerten berechnet werden. Diese Reihe der während der Rotation oder einer Teilrotation der Messrolle aufgenommenen Druckwerte kann aus den an zwei Rotationspositionen der Messrolle gemessenen Druckwerten bestehen, wobei sich die eine Rotationsposition im Bereich des Spalts befindet. Bei kontinuierlicher Druckmessung über einen Rotationsabschnitt der Messrolle, vorzugsweise über den Umschlingungsbereich, kann die Maximalwertbildung durch Funktionsapproximation des Druckverlaufs mit herkömmlichen mathematischen Mitteln und Maximalwertsbestimmung durch zweifache Ableitung dieser Funktionsapproximation ermittelt werden. Andere mathematische Methoden zum Ermitteln eines Maximalwerts aus einer Reihe von Druckwerten sind ebenfalls einsetzbar.

Insbesondere zur Ermittlung des in Richtung der Messrollenachse gerichteten Verlaufs der Linienkraft (Linienkraft-Profil) oder beispielsweise zur Ermittlung des auf die Oberfläche der Messrolle ausserhalb des Spalts wirkenden Druckverlaufs, kann durch mehrere Drucksensoren der auf in Achsrichtung der Messrolle nebeneinander angeordneten Oberflächenabschnitten wirkende Druck gemessen werden.

Das ermittelte Linienkraft-Profil kann in ein Oberflächenprofil des Bandes umgerechnet werden.

Gemäß einer bevorzugten Ausführungsform kann mittels eines Drucksensors der auf einen Oberflächenabschnitt wirkende Druck gemessen werden, wenn sich der Oberflächenabschnitt außerhalb des Spalts befindet und aus dem Messwert, der auf den dem Oberflächenabschnitt zugehörigen Bandbreitenabschnitt wirkende Bandzug (spezifische Bandzug) berechnet werden. Durch mehrere Drucksensoren kann der auf in Achsrichtung der Messrolle nebeneinander angeordnete Oberflächenabschnitte wirkende Druck gemessen werden, wenn sich der jeweilige Oberflächenabschnitt außerhalb des Spalts befindet. Die so ermittelten Druckwerte können beispielsweise auch durch Mittlung zur Ermittlung eines Bandzugs verwendet werden. Aus dem in Achsrichtung weisenden Bandzugverlauf kann ebenfalls das Oberflächenprofil des Bandes berechnet werden.

Es hat sich gezeigt, dass der Verlauf des gemessenen Drucks während der Rotation einen Anstieg von 0 auf einen ersten Plateauwert aufweist. Dies reflektiert den Verlauf der Sensorüberdeckung vom nicht überdeckten zum voll überdeckten Zustand durch das Band. Von diesem ersten Plateauwert ist der Radialkraftverlauf im Bereich der Überdeckung mit vom Auflaufpunkt zunehmendem Rotationswinkel abnehmend. Hieraus lässt sich die zwischen der Oberfläche des Bandes und der Oberfläche der Messrolle wirkende Reibung ermitteln. Neben anderen denkbaren Rechenmethoden lässt sich der Reibwert besonders einfach dadurch ermitteln, dass aus den über einen Rotationsabschnitt der Messrolle kontinuierlich gemessenen Druck-Messwerten ein Druckverlauf ermittelt wird, der Druckverlauf durch eine Ausgleichsgerade approximiert wird und aus der Steigung der Ausgleichsgerade die zwischen der Messrollenoberfläche und der Bandoberfläche bestehende Reibung ermittelt wird.

Die Ermittlung der Reibung erlaubt Rückschlüsse auf die Materialoberfläche des geförderten Bandes. Wird der Reibwert über eine längere Zeit beobachtet, so lässt dies eine Bewertung der Qualität der Messrollenoberfläche zu.

Insbesondere kann erfindungsgemäß auch eine Messvorrichtung für ein längsbewegtes Band mit einer Messrolle, die mindestens einen Drucksensor zur Messung eines auf einen Oberlächenabschnitt der Messrolle wirkenden Drucks aufweist und bei der das längsbewegte Band die Messrolle teilweise umschlingend geführt wird und ein Winkelgeber zur Messung des Rotationswinkel der Messrolle relativ zu einer Referenzsposition vorgesehen ist, dazu eingesetzt werden, die Reibung zwischen Bandoberfläche und Messrollenoberfläche zu bestimmen. Hierzu wird der Verlauf der über einen Rotationsbereich gemessenen Druckwerte analysiert, wie beispielsweise vorstehend beschrieben.

Der ermittelte Bandzug kann dazu eingesetzt werden, die tatsächlich auf das Band wirkende Linienkraft präziser zu bestimmen. So kann die ermittelte Linienkraft im Spalt um den ermittelten Bandzug reduziert werden. Daraus ergibt sich die tatsächlich auf das Band wirkende Linienkraft.

Die ermittelten Prozessparameter, insbesondere die gemessene Linienkraft und der gemessene Bandzug finden vorzugsweise in einer Prozessregelung Einsatz. So kann durch Bewegen der Messrolle zur Gegenrolle die Linienkraft eingestellt werden. Dies kann durch achsparalleles Bewegen der Rollen zueinander oder - je nach einzustellendem Linienkraftverlauf - durch Verschwenken oder Kippen der Rollen erfolgen.

Nachfolgend wird die Erfindung anhand einer lediglich Ausführungsbeispiele zeigenden Zeichnung näher erläutert. Darin zeigen
- Fig. 1: die erfindungsgemäße Messvorrichtung in einer schematischen Seitenansicht,
- Fig. 2: den zwischen Messrolle und Gegenrolle gebildeten Spalt der Messvorrichtung nach Fig. 1 in einer Draufsicht,
- Fig. 3: ein Messsignalverlaufsdiagramm der von dem Drucksensor der Messvorrichtung nach Fig. 1 gemessenen Werte,
- Fig. 4: eine weitere Ausführungsform einer erfindungsgemäßen Messvorrichtung in einer schematischen Seitenansicht und
- Fig. 5: ein Messsignalverlaufsdiagramm der von dem Drucksensor der Meßvorrichtung nach Fig. 4 gemessenen Werte.

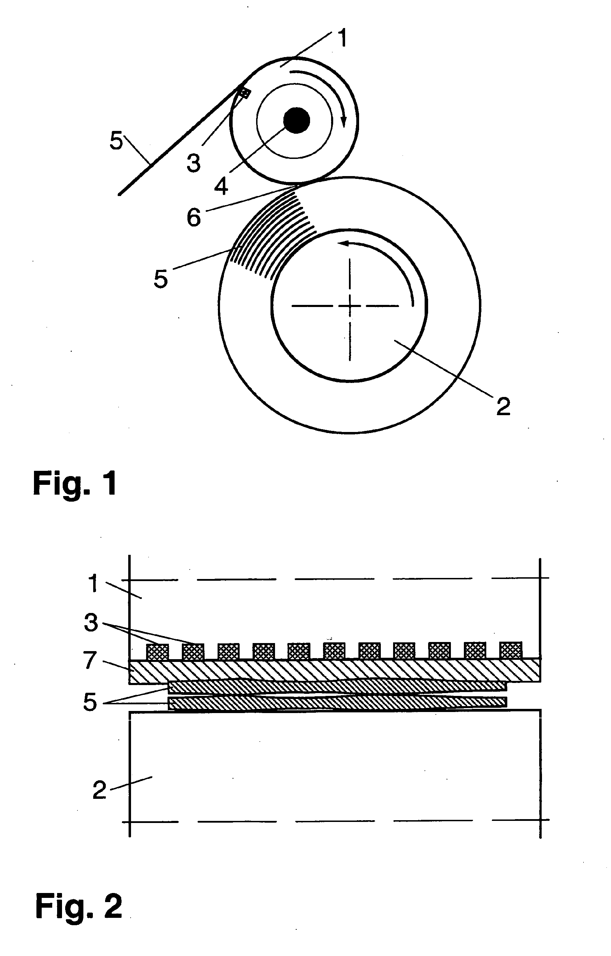

Die in Fig. 1 dargestellte Messvorrichtung weist eine Meßrolle 1 und eine als Wickelrolle ausgebildete Gegenrolle 2 auf. Die Messrolle 1 weist mehrere Drucksensoren 3 auf. Diese sind in einer zur Messrollenachse parallelen Linie an der Oberfläche der Messrolle 1 angeordnet (Fig. 2). Die Drucksensoren 3 nehmen den auf einen ihnen jeweils zugeordneten Oberflächenabschnitt der Messrolle 1 wirkenden Druck auf. An der Nabe der Messrolle 1 ist ein Winkelgeber 4 angeordnet. Dieser misst die Rotationsposition der Messrolle 1 als Rotationswinkel relativ zu einem festgelegten Referenzpunkt.

Die Messvorrichtung ist derart angeordnet, daß das geförderte und aufzuwickelnde Band 5 mit einer Umschlingung von 224° um die Messrolle 1 und durch den zwischen Messrolle 1 und Gegenrolle 2 gebildeten Spalt 6 geführt wird. Nach Durchlaufen des Spalts 6 wickelt sich das Band auf die Gegenrolle 2 auf. Nicht dargestellte Halterungen der Messrolle 1 und der Gegenrolle 2 sind derart ausgebildet, daß die Messrolle 1 und die Gegenrolle 2 unter Beibehaltung ihrer achsparallelen Ausrichtung aufeinander zu und voneinander fort bewegt werden können.

Wie aus Fig. 2 ersichtlich, sind die Drucksensoren 3 nebeneinander in Achsrichtung der Messrolle 1 angeordnet. Die Messrolle 1 ist mit einer Beschichtung 7 versehen. Diese besteht aus einem elastischen Material und passt sich an das Oberflächenprofil einer an ihr anliegenden Bandlage an. Fig. 2 zeigt, daß das Band nach dem Durchlaufen des Spalts auf der Gegenrolle 2 aufgewickelt wird. Im Spalt zwischen der Messrolle 1 und der Gegenrolle 2 befinden sich nach zunehmendem Aufwickeln des Bandes bereits aufgewickelte Bandlagen und die jeweils aktuell zu vermessende Bandlage. Diese aktuell zu vermessende Bandlage ist in Fig. 2 die an der Messrolle 1 anliegende Bandlage.

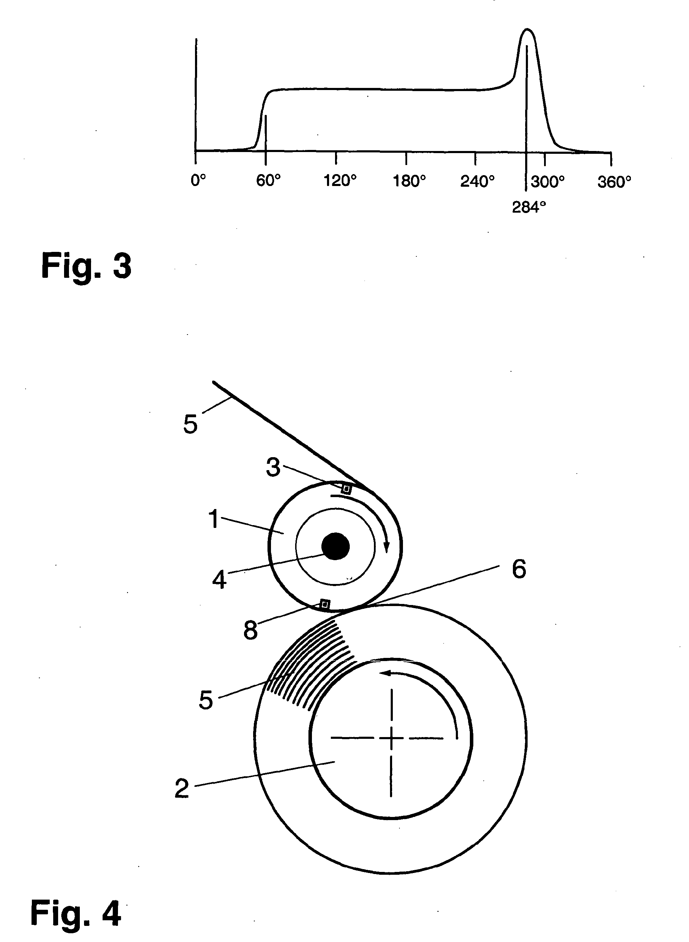

Die in der Fig. 4 dargestellte Ausführungsform der erfindungsgemäßen Messvorrichtung ist derart ausgebildet, daß der Umschlingungswinkel des Bandes 5 um die Messrolle 1 geringer ist, nämlich ca. 140°. Die Messrolle 1 weist einander gegenüberliegende Drucksensoren 3,8 auf. Diese sind in Abhängigkeit der Umschlingung der Messrolle so angeordnet, daß sich immer nur einer der Sensoren 3,8 in einem Bereich befindet, der von dem Band umschlungen wird.

Während das Band 5 die Messrolle 1 umläuft, rotiert diese mit. Der Drucksensor 3 folgt dem an ihm anliegenden Bandabschnitt und misst die durch die Anlage des Bandabschnitts auf die Messrolle 1 in diesem Oberflächenbereich wirkende Druckkraft. Der Drucksensor 3 misst die Druckkraft kontinuierlich während der Rotation der Messrolle 1. Ein von dem Winkelgeber 4 gemessener Rotationswinkel der Messrolle wird den Messsignalen des Drucksensors zugeordnet. Dadurch entsteht die Darstellung des Messsignalverlaufs relativ zu einem gewählten Referenzpunkt gemäß Fig. 3. Fig. 3 zeigt den Messsignalverlauf im Verhältnis des Rotationswinkels der Messrolle.

Wie Fig. 3 zeigt, befindet sich der Bandauflauf auf die Messrolle bei dem relativen Rotationswinkel 60°. Das heißt, dass der Drucksensor das Auflaufen auf das Band an dieser Stelle feststellen kann. Der in Fig. 3 dargestellte Messsignalverlauf zeigt in diesem Bereich einen steilen Anstieg auf ein erstes Druckniveau.

Unter Vernachlässigung von zwischen dem Band und der Messrollenoberfläche wirkenden Reibkräften bleiben die einzig durch den Bandzug erzeugten Druckkräfte während der weiteren Führung des vom Drucksensor 3 beobachteten Bandabschnitts um die Messrollenachse zunächst konstant. Beim Durchlaufen des Spalts 6 registriert der Drucksensor eine Druckspitze, wie aus Fig. 3 ersichtlich. Nach Auslaufen aus dem Spalt verläßt das Band 5 die Messrolle, so dass das vom Drucksensor erfasste Signal auf Null abfällt.

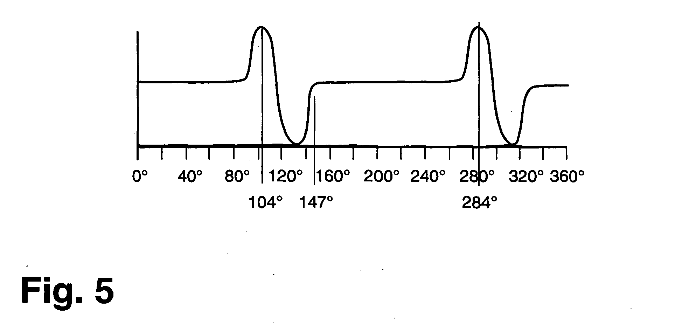

In Fig. 5 ist der Verlauf eines Messsignals dargestellt, das sich ergibt, wenn die Signalleitungen der Drucksensoren 3 und 8 parallel miteinander verschaltet werden. Fig. 5 zeigt den Messsignalverlauf im Verhältnis des Rotationswinkels der Messrolle. Hier wiederholt sich der bezüglich Fig. 3 bereits beschriebene Verlauf während einer vollen Rotation der Messrolle. Der Messsignalverlauf zeigt die Addition der von den Drucksensoren 3 und 8 ermittelten Signale. Da jeweils einer der Drucksensoren nicht im Umschlingungsbereich ist, ist das von ihm ermittelte Drucksignal Null. Durch diese Anordnung kann die Zahl der Signalkanäle reduziert werden, da zur Übertragung der Messsignale zweier speziell angeordneter Drucksensoren nur ein Kanal notwendig ist.

Aus den in Fig. 3 und 5 dargestellten Messsignalverläufen lassen sich mehrere Prozessparameter ermitteln. Der im Bereich zwischen dem Auflaufen auf die Messrolle und dem Durchlaufen des Spalts unter Vernachlässigung der Reibung konstante Druckwert läßt sich in bekannter Weise auf den dem Drucksensor zugeordneten Bandbereich wirkenden, spezifischen Bandzug umrechnen. Durch Mittelung der so ermittelten spezifischen Bandzüge der von den nebeneinander angeordneten Drucksensoren betrachteten Bandabschnitte läßt sich der miniere Bandzug ermitteln. Ferner ermöglicht die Auswertung der relativen Unterschiede der spezifischen Bandzüge an den einzelnen Bandbreitenpositionen eine Aussage über das Bandzugprofil bzw. das Oberflächenprofil des Bandes.

Das beim Durchlaufen des Spalts 6 gemessene Druckmaximum läßt sich unter Berücksichtigung des bereits vorher herrschenden Bandzugs in die exakte, auf das Band wirkende Linienkraft (Nipkraft) umrechnen. Hierdurch kann vom Bandzug unverfälschte Linienkraft ermittelt werden. Durch Analyse der über die Bandbreite gemessenen, unterschiedlichen Walzkräfte kann der Linienkraftverlauf im Spalt bzw. das Oberflächenprofil des Bandes ermittelt werden.

Die ermittelten Prozessparameter, beispielsweise der spezifische Bandzug, der mittlere Bandzug der axiale Bandzugverlauf, die absolute Linienkraft, die korrigierte Linienkraft, der Linienkraftverlauf und/oder der Oberflächenprofilverlauf des Bandes können im Rahmen eines Regelungssystems zur Regelung von Bearbeitungsschritten des Bandes eingesetzt werden. So kann durch die ermittelten Messwerte eine Linienkraft eingeregelt werden, die einem vorgegebenen Wert und vorgegebenen Verlauf entspricht. Ebenso können Stellgrößen bei der Banderzeugung, beispielsweise beim Gießen des Bandes, und insbesondere die Profil-, Planheits- und Dickenregelung des Bandes durch die Messergebnisse beeinflusst werden.

## Patentansprüche

1. Messvorrichtung für ein längsbewegtes Band (5) mit einer Messrolle (1) und einer Gegenrolle (2), bei der
- die Messrolle (1) mindestens einen Drucksensor (3, 8) zur Messung eines auf einen Oberflächenabschnitt der Messrolle (1) wirkenden Drucks aufweist,
- zwischen Messrolle (1) und Gegenrolle (2) ein Spalt (6) ausgebildet ist,
- das längsbewegte Band (5) die Messrolle (1) teilweise umschlingend und durch den Spalt (6) geführt wird,
- ein Winkelgeber (4) zur Messung des Rotationswinkel der Messrolle (1 ) relativ zu einer Referenzsposition vorgesehen ist.

2. Messvorrichtung nach Anspruch 1, **dadurch gekennzeichnet, daß** die Messrolle (1) mehrere Drucksensoren (3, 8) aufweist, die derart angeordnet sind, daß sie den jeweils auf in Achsrichtung der Messrolle nebeneinander angeordnete Oberflächenabschnitte wirkenden Druck messen.

3. Messvorrichtung nach Anspruch 1 oder 2, **dadurch gekennzeichnet, daß** der Drucksensor (3, 8) ein Piezoelement enthält.

4. Messvorrichtung nach einem der Ansprüche 1 bis 3, **dadurch gekennzeichnet, daß** zwei Drucksensoren (3, 8) elektrische Anschlüsse aufweisen und diese Anschlüsse zu einer Parallelschaltung zusammengeschlossen sind.

5. Messvorrichtung nach Anspruch 4, **dadurch gekennzeichnet, daß** die beiden Drucksensoren (3, 8) derart angeordnet sind, daß sie den auf um 180° zueinander versetzte Oberflächenabschnitte wirkenden Druck messen.

6. Messvorrichtung nach einem der Ansprüche 1 bis 5, **dadurch gekennzeichnet, daß** die Messrolle (1) mit einem elastischen Material beschichtet ist.

7. Messvorrichtung nach einem der Ansprüche 1 bis 6, **dadurch gekennzeichnet, daß** die Gegenrolle (2) relativ zur Messrolle (1) bewegt werden kann.

8. Messvorrichtung nach einem der Ansprüche 1 bis 7, **dadurch gekennzeichnet, daß** die Gegenrolle (2) als Wickelrolle ausgebildet ist.

9. Messverfahren für Prozessparameter einer Bandförderung, **dadurch gekennzeichnet, daß**
- das Band (5) in teilweiser Umschlingung um eine mitdrehende Messrolle (1), die mindestens einen Drucksensor (3, 8) zur Messung eines auf einen Oberflächenabschnitt der Messrolle (1) wirkenden Drucks aufweist, und durch einen zwischen der Messrolle (1) und einer Gegenrolle (2) gebildeten Spalt (6) geführt wird,
- der auf einen Oberflächenabschnitt der Messrolle (1) wirkende Druck mittels des Drucksensors (3, 8) mindestens an zwei Rotationspositionen der Messrolle (1) gemessen wird und
- der Rotationswinkel der Messrolle (1) relativ zu einer Referenzsposition gemessen wird.

10. Messverfahren nach Anspruch 9, **dadurch gekennzeichnet, daß** der Drucksensor (3, 8) zumindest über einen Rotationsabschnitt der Messrolle (1) kontinuierlich misst.

11. Messverfahren nach Anspruch 9 oder 10, **dadurch gekennzeichnet, daß** die Messwerte des Drucksensors (3, 8) jeweils einem gemessenen Rotationswinkel zugeordnet werden.

12. Messverfahren nach einem der Ansprüche 9 bis 11, **dadurch gekennzeichnet, daß** der auf einen Oberflächenabschnitt der Messrolle (1) wirkende Druck mittels des Drucksensors (3, 8) gemessen wird, wenn sich der Oberflächenabschnitt im Bereich des Spalts (6) befindet.

13. Messverfahren nach Anspruch 12, **dadurch gekennzeichnet, daß** die auf das Band (5) wirkende Linienkraft im Spalt (6) durch Maximalwertsbildung aus der Reihe der während einer Rotation oder einer Teilrotation der Messrolle (1) ermittelten Druckwerten berechnet wird.

14. Messverfahren nach einem der Ansprüche 9 bis 13, **dadurch gekennzeichnet, daß** durch mehrere Drucksensoren (3, 8) der jeweils auf in Achsrichtung der Messrolle (1) nebeneinander angeordnete Oberflächenabschnitte wirkende Druck gemessen wird.

15. Messverfahren nach Anspruch 14, **dadurch gekennzeichnet, daß**
- mittels der Drucksensoren (3, 8) der auf in Achsrichtung nebeneinander angeordneten Oberflächenabschnitten wirkende Druck gemessen wird, wenn sich der jeweilige Oberflächenabschnitt im Bereich des Spalts (6) befindet,
- jeweils die auf den dem Oberflächenabschnitt zugehörigen Breitenabschnitt des Bandes (5) wirkende Linienkraft im Spalt (6) durch Maximalwertsbildung aus der Reihe der während einer Rotation oder einer Teilrotation der Messrolle (1) ermittelten Druckwerte des zugehörigen Drucksensors (3, 8) berechnet wird und
- das Linienkraft-Profil über die Breite des Bandes (5) aus den den Breitenabschnitten zugehörigen Linienkraft-Werten ermittelt wird.

16. Messverfahren nach Anspruch 15, **dadurch gekennzeichnet, daß** aus dem Linienkraft-Profil das Oberflächenprofil des Bandes (5) berechnet wird.

17. Messverfahren nach einem der Ansprüche 9 bis 16, **dadurch gekennzeichnet, daß** mittels eines Drucksensoren (3, 8) der auf einen Oberflächenabschnitt wirkende Druck gemessen wird, wenn sich der Oberflächenabschnitt außerhalb des Spalts (6) befindet und aus dem Messwert der auf den dem Oberflächenabschnitt zugehörigen Bandbreitenabschnitt wirkende Bandzug berechnet wird.

18. Messverfahren nach Anspruch 17, **dadurch gekennzeichnet, daß** durch mehrere Drucksensoren (3, 8) der jeweils auf in Achsrichtung der Messrolle (1) nebeneinander angeordnete Oberflächenabschnitte wirkende Druck gemessen wird, wenn sich der jeweilige Oberflächenabschnitt außerhalb des Spalts (6) befindet und aus den Messwerten der auf das Band (5) wirkende mittlere Bandzug berechnet wird.

19. Messverfahren nach Anspruch 18, **dadurch gekennzeichnet, daß** aus den Messwerten der auf das Band (5) wirkende Bandzugverlauf gemessen wird.

20. Messverfahren nach Anspruch 19, **dadurch gekennzeichnet, daß** aus dem Bandzugverlauf das Oberflächenprofil des Bandes (5) berechnet wird.

21. Messverfahren nach einem der Ansprüche 9 bis 20, **dadurch gekennzeichnet, daß** aus den über einen Rotationsabschnitt der Messrolle gemessen Druck-Messwerten ein Druckverlauf ermittelt wird, der Druckverlauf durch eine Ausgleichsgerade approximiert wird und aus der Steigung der Ausgleichsgerade der zwischen der Messrollenoberfläche und der Bandoberfläche bestehende Reibwert ermittelt wird.
